# EUROPEAN PATENT SPECIFICATION

(11) **EP 2 954 002 B1**
(45) Date of publication and mention of the grant of the patent: **02.11.2016**
(21) Application number: 14714338.2
(22) Date of filing: 11.02.2014
(51) Int. Cl.: C08K 3/04, B60C 1/00, C08K 3/34, C08L 23/22

(54) **TYRE INNERLINER COMPOUND**
INNENSCHICHTVERBINDUNG EINES REIFENS
COMPOSÉ POUR REVÊTEMENT INTÉRIEUR DE PNEU

(30) Priority: 11.02.2013 IT RM20130074
(43) Date of publication of application: 16.12.2015
(73) Proprietor: Bridgestone Corporation, Tokyo 104-8340 (JP)
(72) Inventor: FORTE, Gianluca, I-00156 Roma (IT)
(74) Representative: Marchetti, Alessio
(86) International application number: PCT/IB2014/058923
(87) International publication number: WO 2014/122636

(56) References cited:
- JP-A- 2008 266 517
- JP-A- 2009 138 135
- JP-A- 2010 013 543
- US-A- 5 430 087
- US-A- 5 798 405
- US-A1- 2006 270 775
- US-A1- 2007 015 853
- US-A1- 2010 041 815
- US-A1- 2010 181 002
- US-A1- 2011 015 303

## Description

### TECHNICAL FIELD

The present invention relates to a tyre innerliner compound.

Here and hereinafter, 'innerliner' is intended to mean an inner rubber layer substantially impermeable to air, and which is used in tubeless tyres, i.e. tyres with no inner tube, to maintain air pressure inside the carcass. The innerliner must also ensure oxygen is effectively retained inside the carcass, and prevented from spreading to and deteriorating other parts of the tyre.

The term 'curing system' is intended to mean substances, such as sulphur and acceleants, capable of cross-linking a polymer base.

### BACKGROUND ART

Innerliner compounds generally have a halobutyl rubber matrix, which, though expensive, provides for better impermeability than other polymer bases.

One way of improving the impermeability of an innerliner is to make it thicker. As anyone skilled in the art knows, however, a thicker innerliner is more expensive to produce, and increases the weight of the tyre, thus increasing overall vehicle fuel consumption and rolling resistance.

Demand therefore exists for increasingly thinner innerliners, but with no impairment in impermeability.

One way of increasing the impermeability of innerliners without making them thicker is to use a compound with special fillers, which, if properly mixed, produce a steric hindrance capable of greatly improving the impermeability of the innerliner. In other words, when mixed with the polymer base, fillers such as clay, kaolin, mica, etc. form in the end product an obstacle preventing air from passing through the product and so improving its impermeability. In this connection, it is important to note that any anisotropy of the filler may emphasize the impermeability characteristics of the rubber.

This solution, however, while improving the impermeability of the innerliner, may result in impairment of its physical characteristics, such as crack resistance, particularly at low temperature, and crack propagation resistance.

### DISCLOSURE OF INVENTION

The Applicant has devised an alternative solution capable of improving the oxygen impermeability properties of innerliners without compromising the above physical characteristics. As such, for a given degree of impermeability, innerliners may be made thinner, with all the manufacturing advantages referred to above.

According to the present invention, there is provided a tyre innerliner compound comprising a polymer base composed at least partly of butyl rubber and/or halobutyl rubber; a filler system; and a curing system; said compound being characterized in that said filler system comprises 60 to 80 phr of a silicon-based lamellar mineral filler; and 8 to 30 phr of a carbon black mixture comprising a first carbon black with a nitrogen-absorption-measured surface area (N2SA) of 21 to 39 m²/g, and a second carbon black with a nitrogen-absorption-measured surface area (N2SA) of 70 to 120 m²/g.

The surface area ranges were measured by nitrogen absorption as per ASTM Standard D6556.

Preferably, the compound comprises 5 to 25 phr of each of said first and second carbon black.

Preferably, the quantity ratio of said first and second carbon black ranges between 1 and 4, and more preferably between 1 and 2.

### BEST MODE FOR CARRYING OUT THE INVENTION

According to the present invention, there are also provided an innerliner made from the compound as defined above, and a tyre comprising such an innerliner.

The following are purely non-limiting examples for a clearer understanding of the present invention.

### EXAMPLES

Six control compounds (A-F) and two compounds according to the present invention (G, H) were produced.

As shown below, the control compounds serve to demonstrate how the mixture of two carbon blacks as claimed is what determines the advantages of the compounds according to the invention. More specifically, compound A is a commonly used innerliner compound; compounds B and C differ from the present invention by comprising a different carbon black mixture; compounds D and E differ from the present invention by comprising only one carbon black; and compound F differs from the present invention by comprising a different amount of clay.

Table I shows the compositions in phr of the above control compounds.

**TABLE I**

| | A | B | C | D | E | F |
|---|---|---|---|---|---|---|
| Halobutyl rubber | 100 | | | | | |
| Kaolin | 30 | 60 | 60 | 60 | 60 | 30 |
| Carbon black N660 | 40 | 15 | -- | -- | 25 | 20 |
| Carbon black N330 | -- | -- | 15 | 25 | -- | 20 |
| Carbon black N134 | | 10 | 10 | -- | -- | -- |
| Stearic acid | 1 | | | | | |
| Zinc oxide | 2 | | | | | |
| Resin | 3 | | | | | |
| Oil | 6 | | | | | |
| Sulphur | 0.8 | | | | | |
| Accelerants | 1 | | | | | |

The halobutyl rubber is a bromobutyl rubber.

The kaolin used is marketed by CAMIN under the trade name POLYFIL DL.

Carbon black N660 has a surface area of 34 m²/g. Carbon black N330 has a surface area of 78.6 m²/g. Carbon black N134 has a surface area of 131 m²/g. Table II shows the compositions in phr of the compounds according to the present invention, which differ from each other as to the amount of clay used.

**TABLE II**

| | G | H |
|---|---|---|
| Halobutyl rubber | 100 | |
| Kaolin | 60 | 80 |
| Carbon black N660 | 15 | 15 |
| Carbon black N330 | 10 | 10 |
| Stearic acid | 1 | |
| Zinc oxide | 2 | |
| Resin | 3 | |
| Oil | 6 | |
| Sulphur | 0.8 | |
| Accelerants | 1 | |

From each of the compounds in Tables I and II, cured-rubber specimens were made, the characteristics of which correspond to those of the innerliner obtainable from the compound.

The specimens were tested for oxygen impermeability, low-temperature crack formation resistance, and crack propagation resistance.

Oxygen impermeability testing was performed on 0.7 mm thick specimens, using a conventional apparatus, such as a MOCON^{®} OX-TRA^{®} (model 2/61). And the measurements were taken at a temperature of 25°C.

Low-temperature crack formation resistance testing was performed as per ETM Standard 135 at a temperature of -40°C.

Crack propagation resistance testing was performed as per ETM Standard 119 at a temperature of 25°C.

Tables III and IV show the results of the above tests, indexed to those of compound A. For a clearer understanding of the results in Tables III and IV, the lower the value indicated, the better the respective characteristic is.

**TABLE III**

| | A | B | C | D | E | F |
|---|---|---|---|---|---|---|
| Permeability | 100 | 86 | 60 | 68 | 77 | 82 |
| Low-temp. crack formation | 100 | 120 | 145 | 128 | 110 | 120 |
| Crack propagation | 100 | 138 | 155 | 138 | 105 | 115 |

**TABLE IV**

| | G | H |
|---|---|---|
| Permeability | 65 | 50 |
| Low-temp. crack formation | 112 | 118 |
| Crack propagation | 110 | 110 |

Comparison of the results in Tables III and IV clearly shows how only the compounds according to the invention succeed in achieving a high degree of impermeability without compromising physical characteristics relating to crack formation and propagation resistance.

It is important to note how combining clay with a carbon black mixture other than the one claimed, or with only one of the carbon blacks in the mixture claimed, fails to achieve the advantages sought. In fact, whenever a control compound shows an improvement in impermeability, it also shows a deterioration in crack formation and propagation resistance, and vice versa.

Moreover, as shown by control compound F, to achieve the advantages sought, simply combining clay with the carbon black mixture claimed is not enough, without also employing the quantities defined in the object of the present invention.

## Claims

1. A tyre innerliner compound comprising a polymer base composed at least partly of butyl rubber and/or halobutyl rubber; a filler system; and a curing system; said compound being **characterized in that** said filler system comprises 60 to 80 phr of a silicon-based lamellar mineral filler; and 8 to 30 phr of a carbon black mixture comprising a first carbon black with a nitrogen-absorption-measured surface area (N2SA) of 21 to 39 m²/g, and a second carbon black with a nitrogen-absorption-measured surface area (N2SA) of 70 to 120 m²/g.

2. A compound as claimed in Claim 1, **characterized by** comprising 5 to 25 phr of each of said first and second carbon black.

3. A compound as claimed in Claim 1, **characterized in that** the quantity ratio of said first and second carbon black ranges between 1 and 4.

4. A compound as claimed in Claim 1, **characterized in that** the quantity ratio of said first and second carbon black ranges between 1 and 2.

5. A tyre innerliner, **characterized by** being made from a compound as claimed in one of the foregoing Claims.

6. A tyre, **characterized by** comprising an innerliner as claimed in Claim 5.

## Patentansprüche

1. Reifeninnerlinerverbindung, umfassend eine mindestens teilweise aus Butylgummi und/oder Halogenbutylgummi zusammengesetzte Polymerbasis; ein Füllstoffsystem; und ein Vulkanisierungssystem; wobei die Verbindung **dadurch gekennzeichnet ist, dass** das Füllstoffsystem 60 bis 80 phr eines siliciumbasierten lamellaren Mineralfüllstoffs umfasst; und 8 bis 30 phr einer Rußmischung, umfassend einen ersten Ruß mit einem durch Stickstoffabsorption gemessenen Oberflächenbereich (N2SA) von 21 bis 39 m²/g, und einen zweiten Ruß mit einem durch Stickstoffabsorption gemessenen Oberflächenbereich (N2SA) von 70 bis 120 m²/g.

2. Verbindung nach Anspruch 1, **gekennzeichnet durch** Umfassen von 5 bis 25 phr von jedem des ersten und zweiten Rußes.

3. Verbindung nach Anspruch 1, **dadurch gekennzeichnet, dass** das Mengenverhältnis des ersten und zweiten Rußes im Bereich zwischen 1 und 4 liegt.

4. Verbindung nach Anspruch 1, **dadurch gekennzeichnet, dass** das Mengenverhältnis des ersten und zweiten Rußes im Bereich zwischen 1 und 2 liegt.

5. Reifeninneliner, **dadurch gekennzeichnet, dass** sie aus einer Verbindung wie in einem der vorstehenden Ansprüche beansprucht hergestellt ist.

6. Reifen, **gekennzeichnet durch** Umfassen eines Innerliners wie in Anspruch 5 beansprucht.

## Revendications

1. Composé de revêtement intérieur de pneumatique comprenant une base polymère composée au moins partiellement de caoutchouc butyle et/ou de caoutchouc halobutyle ; un système de charge ; et un système de vulcanisation ; ledit composé étant **caractérisé en ce que** ledit système de charge comprend 60 à 80 phr d'une charge minérale lamellaire à base de silicium ; et 8 à 30 phr d'un mélange de noirs de carbone comprenant un premier noir de carbone avec une surface spécifique mesurée d'absorption d'azote (N2SA) de 21 à 39 m²/g, et un second noir de carbone avec une surface spécifique mesurée d'absorption d'azote (N2SA) de 70 à 120 m²/g.

2. Composé selon la revendication 1, **caractérisé en ce qu**'il comprend 5 à 25 phr de chacun desdits premier et second noirs de carbone.

3. Composé selon la revendication 1, **caractérisé en ce que** le rapport de quantité desdits premier et second noirs de carbone se situe entre 1 et 4.

4. Composé selon la revendication 1, **caractérisé en ce que** le rapport de quantité desdits premier et second noirs de carbone se situe entre 1 et 2.

5. Revêtement intérieur de pneumatique, **caractérisé en ce qu**'il est fabriqué à partir d'un composé selon l'une des revendications qui précèdent.

6. Pneumatique, **caractérisé en ce qu**'il comprend un revêtement intérieur selon la revendication 5.
